# EUROPEAN PATENT APPLICATION

(11) **EP 1 033 392 A2**
(43) Date of publication of application: **06.09.2000**
(21) Application number: 00200760.7
(22) Date of filing: 02.03.2000
(51) Int. Cl.: C09D 5/16

(54) **Antifouling paint composition**

(30) Priority: 02.03.1999 JP 5351499
(71) Applicant: KANSAI PAINT CO. LTD., Amagasaki-shi Hyogo-ken (JP)
(72) Inventor: Yamashita, Hiroshi, c/o Kansai Paint Co. Ltd., Kanagawa (JP); Yonehara, Yoichi, c/o Kansai Paint Co. Ltd., Kanagawa (JP); Kawai, Hiroyuki, c/o Kansai Paint Co. Ltd., Kanagawa (JP)
(74) Representative: Chettle, Adrian John

(57) **Abstract**

The present invention provides an antifouling paint composition to be applied to ship hulls, constructions in water or on water, materials for fishery. More specifically, the antifouling paint composition exhibits antifouling ability over a long period of time by enabling to control dissolving rate of the coated film without deterioration of paint properties and properties of the coated film after a long time storage. The composition contains (A) a resin, (B) a copper-type antifouling agent, and (C) a chelating agent.

## Description

### Technical Field of the Invention

The present invention relates to an antifouling paint composition which is applied to ship hulls, constructions in water or on water, materials for fishery and the like, more specifically relates to an antifouling paint composition which exhibits antifouling ability over a long period of time by enabling the control of the dissolving rate of the coated film without deterioration of paint properties and properties of coated film after a long time storage.

### Background of the Invention

A resin having a tin carboxylate has hitherto been widely used as a binder for an antifouling paint. However, replacement to the other resins is strongly requested in view of the toxicity. Therefore, resins having mainly a copper or zinc carboxylate, silyl resins and the like have been variously investigated and proposed in, for example, Japanese Patent Application Laid-Open No. 57464/1987, Japanese Patent Application Laid-Open No. 209005/1996, Japanese Patent Application Laid-Open No. 264169/1992.

The antifouling paints containing these resins are begun to be applied to various ships, constructions in water or on water, materials for fishery and the like. However, some of the paints suffer from increase of the viscosity and/or deterioration of properties of the coated surface obtained during a long time storage of the paints, depending on the antifouling agent blended. Especially, these problems have been observed in the case of a copper-type antifouling agent.

### Summary of the Invention

The objective of the present invention is to provide an antifouling paint composition capable of a long time storage even if a copper-type antifouling agent is blended, and exhibiting no inconvenience such as increase of the viscosity and deterioration of properties of the coated film.

The present invention relates to an antifouling paint composition characterized by containing (A) a resin, (B) a copper-type antifouling agent, and (C) a chelating agent.

### Preferred Embodiments of the Invention

In the present invention, hitherto known resins for antifouling paints can be employed without limitation, and especially, it is preferred to employ at least one resin selected from acrylic resins, polyester resins and silyl resins.

In the case that said resin (A) is an acrylic resin or a polyester resin, the resin is desirably the one having a metal carboxylate, and especially the resin is preferably a resin (a) having a metal carboxylate structure in a molecule and/or between molecules, which is formed so that the equivalent ratio of a carboxyl group to a divalent metal in a base resin having an acid value of 10 to 300 mg KOH/g ranges form 0.1 to 5, for example, the one obtained by reacting a base resin having a carboxyl group in the molecule with an oxide or hydroxide of a divalent metal in the presence of 1 to 30% by weight of water based on solid content of the base resin.

The above-mentioned base resin has an acid value of 10 to 300 mg KOH/g, preferably 20 to 200 mg KOH/g, more preferably 50 to 150 mg KOH/g. In the case of the acid value of less than 10 mg KOH/g, abrasiveness of the coated film obtained is insufficient and antifouling property is not satisfactory. On the other hand, the base resin becomes too viscous and its handling becomes difficult when the value exceeds 300 mg KOH/g.

An acrylic resin, a polyester-type resin, and the like are exemplified as said base resin. As to the acrylic resin, an acrylic copolymer obtained by copolymerizing a monomer containing a carboxyl group and the other monomer(s) copolymerizable therewith in the presence of an initiator for radical polymerization according to a conventional method such as solution polymerization can be used. Especially, said acrylic resin is desirably the one having a carboxyl group and a group bearing a polyalkylene glycol structure represented by the following formula:

(CₘH₂ₘ0)ₙ R¹

wherein R¹ represents a hydrogen or a linear, branched, or cyclic alkyl group having 1 to 20 carbon atoms or an aralkyl group, m represents an integer of 1 to 4, and n represents an integer of 1 to 100, respectively. As to said acrylic resin, an acrylic copolymer usually obtained by copolymerizing a monomer containing a carboxyl group, a monomer containing a group having a polyalkylene glycol structure, and the other monomer(s) copolymerizable therewith in the presence of an initiator for radical polymerization according to the conventional method such as solution polymerization can be used. In the case of the resin having a group having said polyalkylene glycol structure, it is preferred that said alkylene glycol unit is contained not less than 0.005 mol in 100 g of the above base resin, in view of improvement of the abrasiveness.
Examples of the above carboxyl group-containing monomer are (meth)acrylic acid, crotonic acid, itaconic acid, maleic acid, fumaric acid, and the like.

Examples of the above monomer containing a group having a polyalkylene glycohol structure are methoxyethyl (meth)acrylate, hydroxyethyl (meth)acrylate, methoxypolyethylene glycol (meth)acrylate, nonylphenoxypolyethylene glycol (meth)acrylate, methoxypolypropylene glycol (meth)acrylate, and the like.

Examples of the other monomer copolymerizable therewith are vinyl aromatic compounds such as stylene, alpha-methylstyrene, vinyltoluene, and alpha-chlorostyrene; alkyl esters or cycloalkyl esters having 1 to 24 carbon atoms or cycloalkyl esters of acrylic acid or methacrylic acid such as methyl (meth)acrylate, ethyl (meth)acrylate, n-propyl (meth)acrylate, i-propyl (meth)acrylate, (n-, i-, t-)butyl (meth)acrylate, hexyl (meth)acrylate, cyclohexyl (meth)acrylate, 2-ethylhexyl (meth)acrylate, n-octyl (meth)acrylate, decyl (meth)acrylate, lauryl (meth)acrylate, stearyl (meth)acrylate, and isobornyl (meth)acrylate; perfluoroalkyl (meth)acrylates such as perfluorobutyl (meth)acrylate, perfluoroisononylethyl (meth)acrylate, and perfluorooctylethyl (meth)acrylate, fluoroolefins, and the like. In addition, so-called macromonomers which are polymers of one and/or more of such monomers and have a polymerizable unsaturated group at the one end, is also mentioned as the copolymerizable monomers.

Examples of the solvent to be used in the solution polymerization of the above monomer mixture are alkylbenzene derivatives such as benzene, toluene, and xylene; acetic acid ester-type solvents such as ethyl acetate, propyl acetate, butyl acetate, amyl acetate, methoxybutyl acetate, methyl acetoacetate, ethyl acetoacetate, methyl cellosolve acetate, cellosolve acetate, diethylene glycol monomethyl ether acetate, and carbitol acetate; ether-type solvents such as dioxane, ethylene glycol diethyl ether, ethylene glycol dibutyl ether, and diethylene glycol diethyl ether; alcohol-type solvents such as methanol, ethanol, propanol, i-propanol, and (n-, i-, t-)butanol; ketone-type solvents such as acetone, methyl ethyl ketone, methyl isobutyl ketone, and cyclohexanone. These solvents may be used either singly or in the form of a mixture of the two or more.

Examples of the initiator for radical polymerization are peroxides such as benzoyl peroxide, di-t-butyl hydroperoxide, t-butyl hydroperoxide, cumyl peroxide, cumene hydroperoxide, diisopropylbenzene hydroperoxide, t-butyl peroxybenzoate, lauryl peroxide, acetyl peroxide, and t-butyl peroxy-2-ethylhexanoate; azo compounds such as alpha, alpha'-azobisisobutyronitrile, alpha, alpha'-azobis-2-methylbutyronitrile, azobisdimethylvaleronitrile, and azobiscyclohexanecarbonitrile.

On the other hand, in the case that the base resin is a polyester resin, the resin is usually synthesized using a polybasic acid and a polyhydric alcohol as main starting materials.

Examples of the polybasic acid are dicarboxylic acids or anhydrides thereof such as terephthalic acid, isophthalic acid, phthalic anhydride, phthalic acid, 1,4-naphtholic acid, diphenic acid, 4,4'-oxybenzoic acid, diglycolic acid, 2,5-naphthalenedicarboxylic acid, tetrahydrophthalic anhydride, hexahydrophthalic anhydride, hexahydrophthalic acid, tetrahydrophthalic acid, 4-methylhexahydrophthalic anhydride, 4-methylhexahydrophthalic acid, tetrabromophthalic anhydride, tetrachlorophthalic anhydride, 2,5-norbornenedicarboxylic acid, oxalic acid, malonic acid, dimethylmalonic acid, succinic acid, glutaric acid, 2,2-dimethylglutaric acid, oxalic acid, adipic acid, dodecanedicarboxylic acid, azelaic acid, sebacic acid, and 1,3-cyclohexyldicarboxylic acid; and alkyl esters having 1 to about 4 carbon atoms of these dicarboxylic acids. These acids can be used either singly or in combination of the two or more. Moreover, these acids may be used in combination with a carboxylic acid having three or more carboxyl groups such as trimellitic acid, trimellitic anhydride, pyromellitic acid, pyromellitic anhydride, butanetetracarboxylic acid. Furthermore, a small amount of a unsaturated dicarboxylic acid such as maleic anhydride, maleic acid, itaconic anhydride, or fumaric acid, and an ester thereof can be used additionally.

Examples of the polyhydric alcohol include ethylene glycol, diethylene glycol, triethylene glycol, polyethylene glycol, 1,2- or 1,3-propylene glycol, dipropylene glycol, polypropylene glycol, neopentyl glycol, 1,5-pentanediol, 1,6-hexanediol, 2-ethyl-1,3-hexanediol, 2,2,4-trimethyl-1,3-pentanediol, 2-butyl-2-ethyl-1,3-propanediol, 1,4-cyclohexanedimethanol, polytetramethylene glycol, bisphenol A and hydrogenated bisphenol A, and these alcohols may be used either singly or in combination of the two or more. In addition, these alcohols may be used in combination with an alcohol having three or more hydroxyl groups such as trimethylolethane, trimethylolpropane, glycerol, pentaerythritol, or dipentaerythritol. Furthermore, dimethylolbutanoic acid, dimethylolpropionic acid, tricyclodecanedimethanol may be additionally used.

In addition to the above polybasic acid and polyhydric alcohol, monobasic acids such as t-butylbenzoic acid and benzoic acid may be used.

Said polyester resin is desirably a polyester resin formed by reacting (i) a polybasic acid component containing 50 mol% or more, preferably 70 mol% or more of an alicyclic 1,2-dicarboxylic acid having two carboxyl groups directly bonded to the carbon atoms forming a six-membered ring or anhydride thereof in the polybasic acid component, (ii) a polyfunctional compound having three or more of carboxyl group(s) and hydroxyl group(s) in total and also at least one carboxyl group in one molecule, and (iii) a polyhydric alcohol component. The components (i) to (iii) to be used may be selected from the polybasic acids and polyhydric alcohols exemplified as above. Said component (iii) desirably contains an alkylene glycol represented by the following formula (II),

HO(CₘH₂ₘO)ₙH

wherein, m represents an integer of 2 to 4, n represents an integer or 1 to 100, respectively.

The production of the above polyester resin is carried out by charging the above polybasic acid and polyhydric alcohol, and optionally a catalyst at once or at any order into a reactor fitted with a stirrer, a whole condenser, a separating condenser, and a torque meter, followed by esterification upon heating at 150 to 200° and termination of the reaction at any point. Hitherto known catalyst for esterification such as a tin compound including dibutyltin oxide, tetrabutyl titanate, or antimony trioxide may be used as said catalyst.

The number average molecular weight of the base resin obtained as above is generally in the range of 1,000 to 200,000, preferably 2,000 to 100,000, and more preferably 2,000 to 50,000. If the number average molecular weight is less than 1,000, the dryness may be insufficient and the coated film may suffer deficiency in weatherability and durability. To the contrary, if the number average molecular weight exceeds 200,000, the coated film may suffer not only degradation of finish appearance but also deficiency in abrasiveness of the coated film and may no longer afford a sufficient antifouling property. Thus, these cases are not preferable.

The resin (a) can be obtained by reacting the base resin obtained as above with an oxide or hydroxide of a divalent metal in the presence of water in an amount of 1 to 30% by weight based on solid content of the base resin usually at 50 to 200° for 1 to 20 hours. While the metal compound in the powdery form is simply dispersed in the base resin during the initial stage of the reaction, the whole becomes transparent with the progress of the reaction. A suitable amount of a polar solvent may be added to said reaction system. Examples of said polar solvent are alcoholic, ketone-type, ester-type, and ether-type solvents.

Although any oxide or hydroxide of the above divalent metal can be used without specific limitation, a metal having a stabilization constant for chelation lower than that of copper is desirable so as not to cause chelation of the chelating agent mentioned below with the metal in the resin (a). Thus, the oxide or hydroxide of either of zinc, calcium, magnesium, or iron is exemplified, and especially oxide or hydroxide of zinc is preferred.

During this step, the water is effective in not only promoting the reaction but also preventing from gelation. If the amount of water is less than 1% by weight, the added water may not manifest this effect. If the amount exceeds 30% by weight, the effect will remain the same. The excess water which has been insoluble in the system after completion of the reaction can be easily removed by such means as reduction of pressure, decantation, and heating.

The blendng ratio of the carboxyl group in the base resin to the metal compound, is preferably in the range of carboxyl group/metal compound = 0.1 to 5.0, in molar ratio. If the molar ratio is smaller than 0.1, the reaction may require a long time and prove impractical. To the contrary, if the molar ratio exceeds 5.0, the resin may not easily manifest lasting abrasiveness since the amount of a free carboxylic acid could be greater than that of the metal carboxylate structure which is an active component. Thus, these cases are not preferable.

The resin (a) obtained as above is prepared by forming metal carboxylate structure in the molecule and/or between the molecules so that the equivalent ratio of the carboxyl group to the divalent metal (COO⁻/M²⁺) in the base resin ranges 0.1 to 5, preferably 0.25 to 2.

In the case that the above resin (A) is a silyl resin, the silyl resin may be a copolymer obtained by copolymerizing, for example, a trialkylsilyl ester of (meth)acrylic acid and the other monomer copolymerizable therewith, or a monomer having a carboxyl group blocked with a trialkylsilyl group and the other monomer copolymerizable therewith, in the presence of an intiator for radical polymerization according to a usual method such as solution polymerization.

When at least one resin selected from acrylic resins, polyester resins, and silyl resins is used as the resin (A), the other resin(s) may be additionally used as required. Examples thereof may be a rosin, a monocarboxylic acid (for example, a fatty acid having 6 to 18 carbon atoms such as naphthenic acid), and a salt thereof (for example, a salt of copper, zinc, calcium, magnesium, or the like). These may be used in the range of not more than 50% by weight, preferably 5 to 30% by weight based on the solid content of the resin (A).

In the present invention, examples of the copper-type antifouling agent (B) are cuprous oxide, copper thiocyanate, copper powder, basic copper chloride, basic copper sulfate, basic copper carbonate, copper silicate, copper hydroxide and the like, and especially, cuprous oxide is preferred. Moreover, said copper-type antifouling agent may be used together with the agent(s) optionally selected from the other hitherto known antifouling agent(s), for example, nitrogen-containing sulfur-type antifouling agents such as zinc ethylenebis(dithiocarbamate), and tetramethylthiuram disulfide; organotin-type antifouling agents such as bis(triphenyltin) oxide, bis(tributyltin) oxide, tributyltin acetate, tributyltin chloride, triphenyltin hydroxide, triphenyltin versatate, and bis(tributyltin) alpha, alpha'-dibromosuccinate; bacteriocides such as nitrile-type compounds, benzothiazol-type compounds, triazine-type compounds, urea-type compounds, isothiazoline-type compounds, maleimide-type compounds, N-haloalkylthio-type compounds, tetracycline-type compounds, pyridine-type compounds including zinc pyrithione and triphenylboron pyridinium salts; and zinc oxide.

The amount of the above copper-type antifouling agent (B) to be blended is suitably in the range of 100 to 300 parts by weight based on 100 parts by weight of solid content of the resin.

In the present invention, the chelating agent (C) is blended in order to prevent increase of viscosity of the paint and deterioration of properties of the obtained coating film by the action of the above copper-type antifouling agent. Any hitherto known one can be employed without specific limitation. Examples of said chelating agent (C) are beta-diketones such as acetylacetone, benzoylacetone, and trifluoroacetylacetone; esters of acetoacetic acid such as methyl acetoacetate, ethyl acetoacetate, and butyl acetoacetate; alpha-dioximes such as dimethylglyoximes; bipyridyls such as 2,2'-bipyridyl; oxines; salicylic acid and derivatives thereof; lower alkanolamines such as triethanolamine; glycols such as ethylene glycol; acetic acid, oxalic acid and derivatives thereof, dicarboxylic acid and derivatives thereof.

Especially, acetylacetone and ethyl acetoacetate are preferred since they are easily soluble in organic solvents and their handling is simple and convenient.

The amount of the above chelating agent (C) to be blended is desirably in the range of 1 to 20% by weight, preferably 2 to 10% by weight based on the weight of the copper-type antifouling agent (B).

The composition of the present invention may further contain, if required, additive(s) for paint such as a pigment, a plastisizer, and a solvent.

The method for forming a coated film using the composition of the present invention is not particularly limited and a hitherto known method can be employed. Concretely, the composition may be applied by brush coating, spray coating, roller coating, or dip coating directly to the surface of substrates such as submarine structures (e.g., ships, port facilities, buoys, pipelines, bridges, submarine bases, cultivating nets, and fixed shore nets), or to the surface of the substrates on which single layer coated film is formed by applying to the base materials a primer such as a wash primer and a zinc epoxy-type shop primer; an undercoating primer such as a vinyl tar-type, an oilly rust preventive, a chlorinated rubber-type, an epoxy-type; a middlecoating paint such as a chlorinated rubber and an epoxy-type; or a plural layer coatied film formed by applying a primer and a undercoating primer paint or a plural layer coated film formed by applying a primer, undercoating primer, and a middlecoating paint successively. The suitable amount of coating is usually within a range of 40 to 500 micronmeters. preferably 80 to 300 micronmeters as a dry film thickness. The coated film can be dried at room temperature, and heat-drying may be conducted at a temperature up to about 100°, as required.

### Examples

The present invention will be described more specifically below with reference to working examples. Herein below, "parts" and "%" refer to "parts by weight" and "% by weight", respectively.

### Production of the resin(A)

### Production Example 1

A reaction vessel was fitted with a thermometer, a thermostat, a stirrer, a reflux condenser, and a dropping pump. After 94 parts of butyl acetate was charged into the vessel and the temperature was raised to 105° under stirring, the resultant mixture was kept at 105°, and a mixture of 18 parts of methacrylic acid, 20 parts of methoxyethyl acrylate, 62 parts of ethyl acrylate, and 3 parts of alpha, alpha'-azobis-2-methylbutyronitrile was added dropwise to the mixture over a period of 4 hours by means of the dropping pump. For 30 minutes after the completion of the dropwise addition, the mixture was kept at 105° and continued to be stirred. Then, a solution of 1 part of alpha, alpha'-azobis-2-methylbutyronitrile in 6 parts of butyl acetate was added dropwise to the mixture over a period of 1 hour and the resultant mixture was kept at the same temperature for 1 hour to complete the reaction. The resin solution thus obtained had a solid content of 50%. The number average molecular weight of the resin was 10,000.

To 100 parts of the above resin solution were added 8 parts of zinc oxide, 7 parts of butanol, and 1 part of water. The resultant mixture was stirred at 120° for 10 hours to afford a transparent resin solution (A-1) having a solid content of 50%. Said resin showed an intense absorption of zinc carboxylate at 1630 cm⁻¹ on IR.

### Production Example 2

To a four-necked flask fitted with a water-separator and a reflux condenser were charged 61 parts of hexahydrophthalic anhydride, 19 parts of trimellitic anhydride, 26 parts of ethylene glycol, and 6 parts of xylene. After the temperature was raised to 160° under stirring, esterification was conducted for 3 hours under removal of water up to 200° and was continued for further 2.5 hours, followed by addition of 61 parts of xylene to finish the reaction. The polyester resin solution thus obtained was a transparent homogeneous solution having an nonvolatile content of 59%, a Gardner viscosity RS, and an acid value of 148 mg KOH/g.

To 100 parts of the above resin solution were added 6.5 parts of zinc oxide, 3 parts of water, 12 parts of butyl acetate, and 12 parts of butanol. The resultant mixture was stirred at 100° for 20 hours to afford a transparent resin solution (A-2) having a solid content of 50%.

### Preparation of antifouling paints

### Example 1

An antifouling paint was obtained by mixing and dispersing 100 parts of the resin solution (A-1) obtained above, 15 parts of chlorinated paraffin, 150 parts of cuprous oxide (made by Furukawa Co., Ltd.), 3 parts of iron oxide red, 1 part of "Aerosil #200" (made by Degussa AG, silica powder), 5 parts of "Disparon A603-20X" (made by Kusumoto Chemicals Ltd., a dispersing agent for pigment), 10 parts of acetylacetone, and 30 parts of xylene in a paint conditioner.

### Examples 2 to 4 and Comparative Examples 1, 2

Each antifouling paint was obtained in the same manner as Example 1 except that the blend in Example 1 was changed to that indicated in Table 1.

**Table 1**

| | | | Working Example | | | | Comparative Example | |
|---|---|---|---|---|---|---|---|---|
| | | | 1 | 2 | 3 | 4 | 1 | 2 |
| Paint blend | Resin solution (A-1) | | 100 | | | 100 | 100 | |
| | Resin solution (A-2) | | | 100 | | | | 100 |
| | Polyace SP-100 (Note) | | | | 100 | | | |
| | Chlorinated paraffin | | 15 | 15 | 15 | 15 | 15 | 15 |
| | Cuprous oxide Cuprous oxide | | 150 | 150 | 150 | 150 | 150 | 150 |
| | Aerosil #200 | | 1 | 1 | 1 | 1 | 1 | 1 |
| | Iron oxide red | | 3 | 3 | 3 | 3 | 3 | 3 |
| | Disparon A603-20X | | 5 | 5 | 5 | 5 | 5 | 5 |
| | Acetylacetone | | 10 | 10 | 10 | | | |
| | Ethyl acetoacetate | | | | | 10 | | |
| | Xylene | | 30 | 30 | 26 | 30 | 20 | 20 |
| Paint viscosity (poise/60 rpm) | | Initial | 15 | 20 | 15 | 15 | 20 | 15 |
| | | After 3 months storage | 15 | 20 | 15 | 15 | 40 | 35 |
| Elongation rate (%) | | Initial | 30 | 20 | 50 | 30 | 30 | 20 |
| | | After 3 months storage | 30 | 20 | 50 | 30 | 5 | 5 |
| Antifouling property (%) | | 12 months | 0 | 0 | 0 | 0 | 0 | 0 |
| | | 24 months | 0 | 0 | 0 | 0 | 0 | 0 |
| (Note) "Polyace SP-100": made by Nitto Kasei Co., Ltd., a silyl resin, solid content of 50% | | | | | | | | |

### Evaluation tests

Each antifouling paint obtained as above was served to the following evaluation tests.
(1) Paint viscosity: Each antifouling paint was placed in a 250 cc container and stored at 40° for 3 months. The viscosity of the paint before and after the storage was measured by means of B-type viscometer (at 60 rpm).
(2) Elongation rate of coated film: Each antifouling paint was applied onto the glass plate on which a releasing paper was pasted, to make the film thickness to be 150 micronmeter, and dried at 20° for 7 days. The coated film was peeled off and cut into a strip shape of 20 mm long and 5 mm width for a test sample. The sample was put on a tensile testing machine and elongation rate (%) of the coated film was measured. The test was conducted at a tensile rate of 8 mm/min.
   Furthermore, test samples were similarly prepared from each antifouling paint stored at 40° for 3 months in the same manner as described in the above (1), and elongation rate (%) of coated films thereof was measured.
(3) Antifouling test: Each antifouling paint obtained as above was applied onto a test plate of 100 x 300 x 3.2 mm size which had been subjected to anticorrosive coating with a vinyl tar-type paint, so that a dry film thickness was 150 micronmeter, and dried at ambient temperature to afford each coated plate. These plates were dipped at a depth of 1 meter in Osaka bay in Takaishi-shi, Osaka-fu, and antifouling property after 12 and 24 months was evaluated in view of the area ratio (%) to which organisms adhered.

According to the present invention, an antifouling paint composition capable of a long time storage even if a copper-type antifouling agent is blended and exhibiting no inconvenience such as increase of viscosity and deterioration of properties of coated film. The composition allows to form a coated film capable of controlling the dissolving rate and manifesting an antifouling property over a long period of time.

## Claims

1. An antifouling paint composition comprising (A) a resin, (B) a copper-type antifouling agent, and (C) a chelating agent.

2. The antifouling paint composition according to the preceding claim, wherein the resin (A) is at least one resin selected from acrylic resins, polyester resins, and silyl resins.

3. The antifouling paint composition according to any one of preceding claims, wherein the resin (A) is a resin (a) having a metal carboxylate structure in a molecule and/or between molecules, which is formed so that the equivalent ratio of a carboxyl group to a divalent metal in a base resin having an acid value of 10 to 300 mg KOH/g ranges from 0.1 to 5.

4. The antifouling paint composition according to claim 3, wherein the resin (a) is the one obtained by reacting a base resin having a carboxyl group in the molecule with an oxide or hydroxide of a divalent metal in the presence of 1 to 30% by weight of water based on solid content of the base resin.

5. The antifouling paint composition according to claim 3 or 4, wherein the base resin in the resin (a) is an acrylic resin having a carboxyl group and a group having a polyalkylene glycol structure represented by the following formula,
(CₘH₂ₘO)ₙ R¹
wherein R¹ represents a hydrogen or a linear, branched, or cyclic alkyl group having 1 to 20 carbon atoms or an aralkyl group, m represents an integer of 1 to 4, and n represents an integer of 1 to 100, respectively.

6. The antifouling paint composition according to claim 3 or 4, wherein the base resin in the resin (a) is a polyester resin formed by reacting (i) a polybasic acid component containing 50 mol% or more of an alicyclic 1,2-dicarboxylic acid having two carboxyl groups directly bonded to the carbon atoms forming a six-membered ring or acid anhydride thereof in the polybasic acid component, (ii) a polyfunctional compound having three or more of carboxyl group(s) and hydroxyl group(s) in total and also at least one carboxyl group(s) in one molecule, and (iii) a polyhydric alcohol component.

7. The antifouling paint composition according to claim 3 or 4, wherein the divalent metal in the resin (a) is at least one metal selected from zinc, calcium, magnesium, and iron.

8. The antifouling paint composition according to claim 1, wherein the copper-type antifouling agent (B) is cuprous oxide.

9. The antifouling paint composition according to claim 1 wherein the chelating agent (C) is at least one selected from acetylacetone and ethyl acetoacetate.
